# EUROPEAN PATENT APPLICATION

(11) **EP 3 992 543 A1**
(43) Date of publication of application: **04.05.2022**
(21) Application number: 19944508.1
(22) Date of filing: 06.09.2019
(51) Int. Cl.: F25B 1/00, C09K 5/04, F25B 43/00, F25B 43/02

(54) **REFRIGERATION CYCLE DEVICE**

(71) Applicant: Toshiba Carrier Corporation, Kawasaki-shi Kanagawa 212-8585 (JP)
(72) Inventor: ARITA Shohei, Fuji-shi, Shizuoka 416-8521 (JP); OKADA Kaku, Fuji-shi, Shizuoka 416-8521 (JP); KIGUCHI Yukio, Fuji-shi, Shizuoka 416-8521 (JP); BABA Atsushi, Fuji-shi, Shizuoka 416-8521 (JP); HATTORI Yuko, Fuji-shi, Shizuoka 416-8521 (JP)
(74) Representative: Gramm, Lins & Partner Patent- und Rechtsanwälte PartGmbB
(86) International application number: PCT/JP2019/035176
(87) International publication number: WO 2021/044613

(57) **Abstract**

A refrigeration cycle device of the embodiment includes a refrigerant flow path. The refrigerant flow path allows a refrigerant to flow through a compressor, a condenser, an expansion device, and an evaporator. The refrigerant contains CF₃I. The refrigerant flow path includes a filter capable of capturing iodine ions.

## Description

### [Technical Field]

Embodiments of the present invention relate to a refrigeration cycle device.

### [Background Art]

In refrigeration cycle devices, use of a refrigerant containing CF₃I has been studied. CF₃I has a low global warming potential and is flame-retardant. Impurities such as metal oxides are generated due to decomposition of CF₃I. A refrigeration cycle device capable of suppressing a flow of the impurities is required.

### [Citation List]

### [Patent Document]

[Patent Document 1] Japanese Unexamined Patent Application, First Publication No. H11-228947
[Patent Document 2] Japanese Unexamined Patent Application, First Publication No. 2015-38214

### [Summary of Invention]

### [Technical Problem]

A problem to be solved by the present invention is to provide a refrigeration cycle device capable of suppressing a flow of impurities.

### [Solution to Problem]

A refrigeration cycle device of the embodiment includes a refrigerant flow path. The refrigerant flow path allows a refrigerant to flow through a compressor, a condenser, an expansion device, and an evaporator. The refrigerant contains CF₃I. The refrigerant flow path includes a filter capable of capturing iodine ions.

### [Brief Description of Drawings]

Fig. 1 is a circuit diagram of a refrigeration cycle device according to a first embodiment.
Fig. 2 is a circuit diagram of a refrigeration cycle device according to a second embodiment.
Fig. 3 is a side view of an oil separator.

### [Description of Embodiments]

Hereinafter, refrigeration cycle devices of embodiments will be described with reference to the drawings.

### (First embodiment)

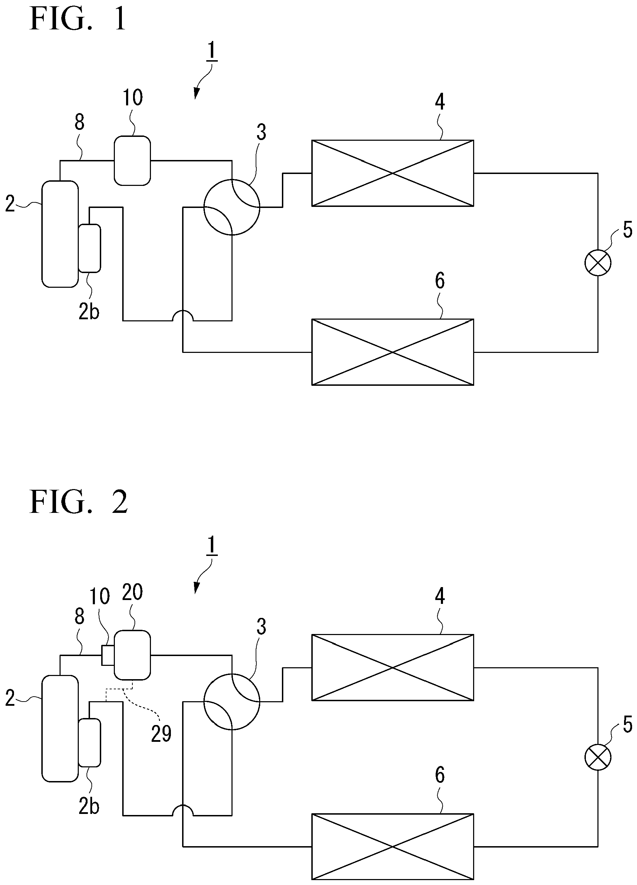

Fig. 1 is a circuit diagram of a refrigeration cycle device of a first embodiment. A refrigeration cycle device 1 includes a compressor 2, a four-way valve 3, a first heat exchanger 4, an expansion device 5, a second heat exchanger 6, and a refrigerant flow path 8 for allowing a refrigerant to flow through them. The refrigerant circulates in the refrigeration cycle device 1 while changing its phase.

The compressor 2 is, for example, a rotary type compressor. The compressor 2 compresses a low-pressure gaseous refrigerant taken into the inside into a high-temperature and high-pressure gaseous refrigerant. An accumulator (gas-liquid separator) 2b is disposed upstream of the compressor 2. The accumulator 2b separates a gas-liquid two-phase refrigerant and supplies a gaseous refrigerant to the compressor 2.

The four-way valve 3 reverses a flow direction of the refrigerant in the refrigerant flow path 8 of the first heat exchanger 4, the expansion device 5, and the second heat exchanger 6. When the four-way valve 3 is in the state illustrated in Fig. 1, a refrigerant discharged from the compressor 2 flows in the order of the first heat exchanger 4, the expansion device 5, and the second heat exchanger 6. At this time, the first heat exchanger 4 functions as a condenser (radiator), and the second heat exchanger 6 functions as an evaporator (heat absorber).

When the four-way valve 3 is switched from the state illustrated in Fig. 1, the refrigerant discharged from the compressor 2 flows in the order of the second heat exchanger 6, the expansion device 5, and the first heat exchanger 4. At this time, the second heat exchanger 6 functions as a condenser (radiator), and the first heat exchanger 4 functions as an evaporator (heat absorber).

The condenser dissipates heat from a high-temperature and high-pressure gaseous refrigerant discharged from the compressor 2 to convert the high-temperature and high-pressure gaseous refrigerant into a high-pressure liquid refrigerant.

The expansion device 5 reduces a pressure of the high-pressure liquid refrigerant sent from the condenser to convert the high-pressure liquid refrigerant into a low-temperature and low-pressure gas-liquid two-phase refrigerant.

The evaporator converts the gas-liquid two-phase refrigerant sent from the expansion device 5 into a low-pressure gaseous refrigerant. In the evaporator, evaporation of the low-pressure gas-liquid two-phase refrigerant takes evaporation heat from the surroundings, and thus the surroundings are cooled. The low-pressure gaseous refrigerant that has passed through the evaporator is taken into the inside of the compressor 2 described above via the accumulator 2b.

As described above, a refrigerant serving as a working fluid circulates in the refrigeration cycle device 1 while changing its phase between a gaseous refrigerant and a liquid refrigerant. The refrigerant dissipates heat in the process of changing phase from gas to liquid and absorbs heat in the process of changing phase from liquid to gas. The refrigeration cycle device 1 performs heating, cooling, defrosting, or the like by utilizing heat dissipation or heat absorption of the refrigerant.

The refrigerant will be described in detail.

The refrigerant contains trifluoroiodomethane (CF₃I). CF₃I has a low global warming potential and is flame-retardant. For example, R466A is used as the refrigerant containing CF₃I. R466A contains 49% by mass of R32, 11.5% by mass of R125, and 39.5% by mass of CF₃I.

CF₃I contained in the refrigerant may be decomposed as follows.

CF₃I+M → CF₃MI

CF₃MI+H₂O → CF₃H+MO+HI

M is a metal such as zinc (Zn), tin (Sn), silver (Ag), iron (Fe), copper (Cu), or the like. Fe and Cu are used as piping materials. Zn is contained in brass serving as a piping material. Sn and Ag are used as plating materials. Water (H₂O) is contained in a very small amount in the refrigerant.

Further, in addition to the above-described decomposition reactions, the following decomposition reaction is conceivable. CF₃I decomposes with the metal M as a catalyst to generate hydrogen iodide (HI). Hydrogen iodide reacts with the metal M to generate a metal iodide (MI). Also, there is a likelihood that iodine molecules (I₂), the metal (M), or the like will be generated.

The metal oxide (MO), the metal iodide (MI), and the metal (M), which are impurities generated due to decomposition of CF₃I, are aggregated to become an agglomerate while flowing through the refrigerant flow path 8. The agglomerated impurities may clog constituent members of the refrigeration cycle device 1. For example, the impurities may block the flow path of the compressor 2 or the expansion device 5. When the impurities clog the constituent members of the refrigeration cycle device 1, the refrigeration cycle device 1 cannot exhibit desired performance.

The above-described decomposition reaction of CF₃I starts from generation of iodine ions (I⁻). Therefore, the refrigerant flow path 8 of the refrigeration cycle device 1 includes a filter 10 capable of capturing at least iodine ions. The filter 10 captures and adsorbs iodine ions which serve as a starting point of the decomposition reaction of CF₃I. Thereby, generation of impurities due to the decomposition of CF₃I is suppressed, and a flow of the impurities in the refrigerant flow path 8 is suppressed. In accordance with this, clogging of impurities in the constituent members of the refrigeration cycle device 1 is suppressed. The refrigeration cycle device 1 can exhibit desired performance. Also, as compared with a case in which a stabilizer for CF₃I is added to the refrigerant, deterioration of the performance of the refrigerant is suppressed.

The filter 10 has an ion exchange resin as a filter material. The ion exchange resin may be any resin as long as it can adsorb iodine ions, and examples thereof may include a strongly basic anion exchange resin having a trimethylammonium group or a dimethylethanolammonium group as a functional group and a weakly basic ion exchange resin having dimethylamine or diethylenetriamine as a functional group.

It is desirable that the filter 10 be capable of capturing water. The filter 10 in this case contains a desiccant (dryer). When water is captured by the filter 10, generation of iodine ions due to the decomposition of CF₃I is suppressed. In accordance with this, generation of impurities starting from generation of iodine ions is suppressed, and a flow of impurities in the refrigerant flow path 8 is suppressed.

It is desirable that the filter 10 be able to capture impurities generated due to the decomposition of CF₃I. The filter 10 in this case has a mesh of a predetermined size. When the impurities are captured by the filter 10, a flow of the impurities in the refrigerant flow path 8 is suppressed.

It is desirable that the filter 10 be able to capture iodine molecules generated due to the decomposition of CF₃I.

A rate of decomposition reaction of CF₃I contained in the refrigerant increases as a temperature of the refrigerant becomes higher. A high-temperature gaseous refrigerant flows through the refrigerant flow path 8 between the first heat exchanger 4 or the second heat exchanger 6 that function as a condenser and the compressor 2. Therefore, the filter 10 is disposed in the refrigerant flow path 8 between the compressor 2 and the condenser. According to switching of the four-way valve 3, the heat exchanger functioning as a condenser is switched. Therefore, the filter 10 is disposed in the refrigerant flow path 8 between the compressor 2 and the four-way valve 3. Thus, the filter 10 is always disposed between the compressor 2 and the condenser.

According to this configuration, the filter 10 is disposed at a place in which the decomposition reaction of CF₃I is active and a frequency of generation of iodine ions is high. The filter 10 can efficiently capture iodine ions. Therefore, the flow of impurities in the refrigerant flow path 8 is suppressed.

### (Second embodiment)

Fig. 2 is a circuit diagram of a refrigeration cycle device of a second embodiment. A refrigeration cycle device 1 of the second embodiment is different from that of the first embodiment in that it has an oil separator 20. Description of points of the second embodiment which are the same as those in the first embodiment will be omitted.

The refrigeration cycle device 1 includes the oil separator 20 in a refrigerant flow path 8 between a compressor 2 and a four-way valve 3. The oil separator 20 separates a refrigerating machine oil contained in a refrigerant flowing through the refrigerant flow path 8. The refrigerating machine oil is a lubricating oil that lubricates a sliding portion inside the compressor 2. Inside the compressor 2 that compresses the refrigerant, the refrigerating machine oil is mixed in the refrigerant. The oil separator 20 is disposed in the refrigerant flow path 8 immediately after the compressor 2. Thereby, an outflow of the refrigerating machine oil to the refrigeration cycle device 1 is suppressed.

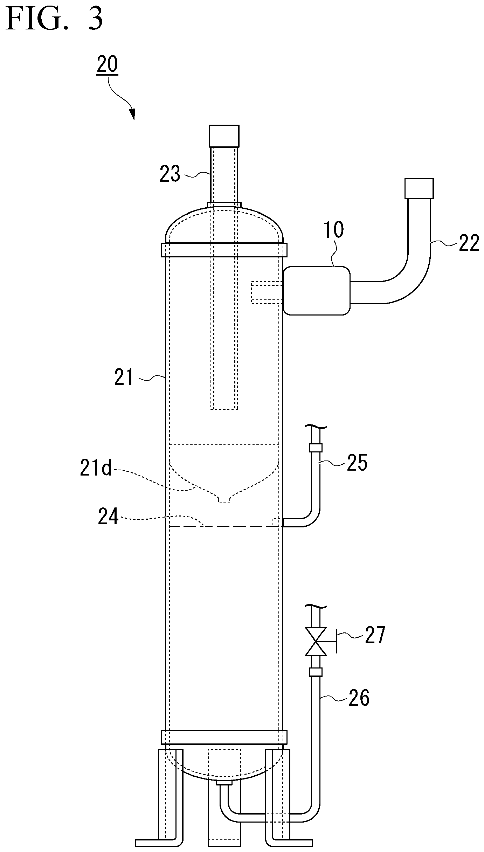

Fig. 3 is a side view of the oil separator. The oil separator 20 includes a separator main body 21, an inlet pipe 22, an outlet pipe 23, a partition plate 21d, a first oil return pipe 25, and a second oil return pipe 26.

The separator main body 21 is formed in a cylindrical shape. Both end portions of the separator main body 21 are closed by bowl-shaped lid members.

The inlet pipe 22 allows the refrigerant to flow into the inside of the separator main body 21. The inlet pipe 22 penetrates an outer circumferential surface of the separator main body 21 above the separator main body 21. Inside the separator main body 21, a distal end of the inlet pipe 22 curves toward an inner circumferential surface of the separator main body 21. The refrigerating machine oil contained in the refrigerant discharged from the distal end of the inlet pipe 22 flows along the inner circumferential surface of the separator main body 21. The oil separator 20 separates the refrigerating machine oil from the refrigerant using a centrifugal force.

The outlet pipe 23 sends a gaseous refrigerant from which the refrigerating machine oil has been separated to the outside of the separator main body 21. The outlet pipe 23 is disposed along a central axis of the separator main body 21. The outlet pipe 23 penetrates a lid member at an upper end portion of the separator main body 21.

The partition plate 21d partitions the inside of the separator main body 21 into an oil separation part and an oil storage part. The oil separation part is an upper half portion of the separator main body 21 in which the inlet pipe 22 and the outlet pipe 23 are disposed. The oil storage part is a lower half portion of the separator main body 21 in which the refrigerating machine oil 24 is stored. The partition plate 21d is disposed at a center portion in a vertical direction inside the separator main body 21. The partition plate 21d is formed in a funnel shape and has an opening at a center in a radial direction. The refrigerating machine oil that has flowed along the inner circumferential surface of the oil separation part of the separator main body 21 flows down to the partition plate 21d. The refrigerating machine oil falls from the opening at the center of the partition plate 21d into the oil storage part.

The first oil return pipe 25 steadily returns the refrigerating machine oil 24 stored in the oil storage part of the separator main body 21 to the compressor 2. The first oil return pipe 25 supplies the refrigerating machine oil to an upstream side of the accumulator 2b via an oil flow path 29 illustrated in Fig. 2. As illustrated in Fig. 3, the first oil return pipe 25 penetrates an outer circumferential surface of the separator main body 21 above the oil storage part of the separator main body 21. The first oil return pipe 25 returns the stored refrigerating machine oil 24 above a height of the first oil return pipe 25 to the compressor 2. The refrigerating machine oil 24 is stored in the oil storage part up to the height of the first oil return pipe 25.

The second oil return pipe 26 returns the refrigerating machine oil 24 stored in the oil storage part of the separator main body 21 to the compressor 2 according to a state of the compressor 2. In the compressor 2, an oil level of the refrigerating machine oil stored inside is detected. When the oil level inside the compressor 2 decreases, the second oil return pipe 26 returns the refrigerating machine oil 24 to the compressor 2. The second oil return pipe 26 supplies the refrigerating machine oil to an upstream side of the accumulator 2b via an oil flow path 29 illustrated in Fig. 2. As illustrated in Fig. 3, the second oil return pipe 26 penetrates a lid member at a lower end portion of the separator main body 21. The second oil return pipe 26 includes a solenoid valve 27. When the oil level inside the compressor 2 decreases, the solenoid valve 27 is opened and the refrigerating machine oil 24 is supplied to the compressor 2.

In the second embodiment, a filter 10 similar to that in the first embodiment is attached to the oil separator 20. Thereby, a size and cost of the refrigeration cycle device 1 can be suppressed as compared with a case in which the oil separator 20 and the filter 10 are installed separately.

A case in which the filter 10 is disposed on an outlet side of the oil separator 20 will be reviewed. All the refrigerant and refrigerating machine oil flowing through the refrigeration cycle device 1 need to pass through the filter 10. For that purpose, it is necessary to dispose the filter 10 in all of the outlet pipe 23, the first oil return pipe 25, and the second oil return pipe 26. In this case, there is a likelihood that the refrigeration cycle device 1 will increase in size and cost.

In the second embodiment, the filter 10 is disposed at an inlet of the refrigerant flow path that allows the refrigerant to flow into the oil separator 20. That is, the filter 10 is disposed in the inlet pipe 22. All the refrigerant and the refrigerating machine oil flowing through the refrigeration cycle device 1 pass through the inlet pipe 22 of the oil separator 20. Therefore, one filter 10 may be disposed in the inlet pipe 22. Also, since a cross-sectional area of the inlet pipe 22 is small, it is not necessary to increase a cross-sectional area of the filter 10. Thereby, increases in size and cost of the refrigeration cycle device 1 can be suppressed.

Iodine ion capture performance of the filter 10 deteriorates due to use for a long time. The filter 10 requires maintenance such as replacement.

The filter 10 is disposed on an outer side of the separator main body 21 of the oil separator 20. The filter 10 is disposed in contact with an outer circumferential surface of the separator main body 21. Thereby, maintenance of the filter 10 is facilitated as compared with a case in which the filter 10 is disposed on an inner side of the separator main body 21.

According to at least one embodiment described above, the filter 10 capable of capturing iodine ions is provided. Thereby, a flow of impurities in the refrigeration cycle device 1 can be suppressed.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### [Reference Signs List]

1 Refrigeration cycle device
2 Compressor
4 First heat exchanger (condenser, evaporator)
5 Expansion device
6 Second heat exchanger (evaporator, condenser)
8 Refrigerant flow path
10 Filter
20 Oil separator

## Claims

1. A refrigeration cycle device comprising a refrigerant flow path which allows a refrigerant to flow through a compressor, a condenser, an expansion device, and an evaporator, wherein
the refrigerant contains CF₃I, and
the refrigerant flow path includes a filter which is capable of capturing iodine ions.

2. The refrigeration cycle device according to claim 1, wherein the filter is disposed in the refrigerant flow path between the compressor and the condenser.

3. The refrigeration cycle device according to claim 2, wherein
an oil separator is provided in the refrigerant flow path between the compressor and the condenser, and
the filter is mounted in the oil separator.

4. The refrigeration cycle device according to claim 3, wherein the filter is disposed at an inlet of the refrigerant flow path which allows the refrigerant to flow into the oil separator.
